(19) Europäisches Patentamt
European Patent Office
Office européen des brevets

(11) Publication number: **0 444 690 B1**

(12) # EUROPEAN PATENT SPECIFICATION

(45) Date of publication of patent specification: **15.11.95**

(51) Int. Cl.$^6$: **B01D 71/48**, C08G 63/68, B01D 53/22

(21) Application number: **91103054.2**

(22) Date of filing: **28.02.91**

(54) **Semipermeable membranes based on polyesters of tetrabromobisphenol A.**

(30) Priority: **01.03.90 US 486917**

(43) Date of publication of application:
**04.09.91 Bulletin 91/36**

(45) Publication of the grant of the patent:
**15.11.95 Bulletin 95/46**

(84) Designated Contracting States:
**BE DE ES FR GB IT SE**

(56) References cited:
**EP-A- 0 003 294**
**EP-A- 0 242 147**
**EP-A- 0 244 126**
**EP-A- 0 376 234**
**DE-A- 2 942 659**
**US-A- 4 066 623**
**US-A- 4 322 521**

**PATENT ABSTRACTS OF JAPAN vol. 6, no. 85 (C-103)(963),22 May 1982; & JP - A - 5719002 (TEIJIN K.K.) 01.02.1982**

(73) Proprietor: **PRAXAIR TECHNOLOGY, INC.**
**39 Old Ridgebury Road**
**Danbury, CT 06810-5113 (US)**

(72) Inventor: **Kawakami, James Hajime**
**2726 Custer Street**
**Picataway,**
**New Jersey 08854 (US)**
Inventor: **Brode, George Lewis**
**653 Carlene Drive**
**Bridgewater,**
**New Jersey 08807 (US)**
Inventor: **Muruganandam, Natarajan**
**26 New Amwell Road**
**Somerville,**
**New Jersey 08876 (US)**

(74) Representative: **Schwan, Gerhard, Dipl.-Ing.**
**Elfenstrasse 32**
**D-81739 München (DE)**

EP 0 444 690 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field of the Invention

This invention relates to semipermeable membranes of polyesters of tetrabromobisphenol A and certain aromatic dicarboxylic acids as the predominant nuclei components of the polyester. The invention also relates to processes using said membranes for the selective permeation of at least one component from a fluid mixture containing said one component in admixture with other components, in particular for gas separations.

### Description of the Prior Art

Permeable membranes capable of selectively permeating one component of a fluid mixture, either liquid or gas, are considered in the art as a convenient, potentially highly advantageous means for achieving fluid separations. For practical commercial operations, permeable membranes must be capable of achieving an acceptable level of selectivity or separation of the gases or liquids contained in the fluids feed stream while, at the same time, achieving a desirably high productivity, or rate, of component separation.

Various types of permeable, or semipermeable, membranes are known in the art for carrying out a variety of fluid separations. Such membranes have been classified as being of the isotropic, or homogeneous, or composite, or asymmetric types and their structures are well known to those skilled in this art.

As the advantages of permeable and semipermeable membranes have become increasingly appreciated, the performance requirements have likewise increased and the drive to find new membranes for more applications has continued to grow. These demands have resulted in the art moving in the direction of very thin membranes having desired permeability characteristics without sacrifice of the separation, or selectivity, characteristics of the membrane, or of the permeation rate, or productivity, of separation achievable.

At the current time permeable membranes are known that are made from a wide variety of materials, e.g. natural and synthetic polymers such as rubbers, polysiloxanes, polyamines, brominated polyphenylene oxide, cellulose acetate, ethyl cellulose, polyethylene, polypropylene, polybutadiene, polyisoprene, polystyrene, the polyvinyls, polyesters, polyimides, polyamides, the polycarbonates, and a host of other materials.

The following table shows the published diameters of a few of the various gases commonly separated with polymeric membranes.

| Gas | He | $H_2$ | $CO_2$ | $O_2$ | $N_2$ | $CH_4$ |
|---|---|---|---|---|---|---|
| Diameter nm (Angstrom) | 0.26 (2.6) | 0.289 (2.89) | 0.33 (3.3) | 0.346 (3.46) | 0.364 (3.64) | 0.38 (3.8) |

In the case of oxygen and nitrogen the size difference is rather small, therefore, most polymeric membranes used commercially to separate nitrogen from oxygen have molecular structures that impede the flow of the gases, e.g., such as oxygen, through the membrane. For that reason these polymeric membranes need to be extremely thin, generally about 20 to about 1,000 nm (about 200 to about 10,000 Angstroms) thick, preferably less than 200 nm (2,000 Angstroms), to make the separation economically viable. The thinner membrane allows faster transport of the permeate through the membrane.

Technology and physical factors limit how thin one can prepare an asymmetric membrane film or the coating of a composite membrane, thus it would be advantageous to develop new membrane polymers which have higher permeation rates without greatly sacrificing their ability to separate the desired gas mixtures. However the large body of gas permeability coefficients and gas separation data in the literature (e.g., Polymer Handbook, 2nd ed. John Wiley & Sons, 1975) generally shows that increasing the permeability of gases, such as oxygen, by varying the polymer structure, decreases the latter's separation characteristics, the ability to separate oxygen from nitrogen. The data also shows that with the current state-of-the-art it is not really possible to predict gas permeation rates or gas selectivity even when rather minor changes are made in the chemical structure of the membrane of one polymer class, such as the polyesters or polycarbonates, even where certain structural features remain constant. The literature also indicates that variations in the membrane itself, be it isotropic, asymmetric or composite in structure, and its thickness can also have a marked effect on permeation rate and selectivity. The inference drawn from the literature is that the inclusion of a large number of arbitrary modifications to the basic polymer structure of one or more polymer classes in many membrane patents is not fully instructive in predicting the usefulness of the alternative structures that had not been studied. It would appear that careful consideration needs to be given

to defining both the chemical and physical structures of membranes suitable for use in gas separation processes.

Many of the factors which influence gas permeability have been largely known for over two decades, but the ability to quantitatively predict the magnitude and even direction of a combination of these factors in a specific polymeric membrane has not been successful to this day. In the nineteen-fifties and nineteen-sixties researchers knew that the attractive forces between polymer chains, packing density, rotation around single bonds in the polymer chain, and the relative rigidity (aromatic structures) or flexibility (aliphatic structures) of the polymer chain affected gas permeability. Rigid highly aromatic polymer structures such as bisphenol A polycarbonates have been examined in attempts to obtain an optimum combination of gas permeability and gas separation or selectivity. For example, high values of gas selectivity for oxygen/nitrogen were obtained, but this was not combined with sufficiently high gas permeability and the desire to attain higher gas permeability has continued.

A publication in August 1975 by Pilato et al. (America. Chem. Soc. Div. Polym. Chem., Polym, Prepr., 16(2) (1975) 41-46) showed that it is possible to modify rigid aromatic polymer structures such as polysulfones, polycarbonates and polyesters, including certain bisphenol-phthalate polyesters not within the scope of this invention, to increase the gas permeation rate without significant decreases in helium/methane and carbon dioxide/methane separations. More data by Pilato et al. show that the incorporation of tetraisopropyl bisphenol A or tetramethylbisphenol L (based on Limonene + Dimethylphenol) in these polymers to try to increase the gas flux resulted in decreased gas selectivity. Therefore, even in the rigid polymer systems, it appears that the general trend noted in the Polymer Handbook holds; increasing the gas permeability results in reduced gas selectivity. Based on this work and the other publications, infra, it appears that additional effort was necessary to achieve higher gas permeability and still retain high gas selectivity.

Also in August 1975 another unusually broad disclosure appeared, US-A-3 899 309 (US-E-30 351, July 29, 1980), which described highly aromatic polyimides, polyamides and polyesters. The patent requires the combination of main chain non-linearity, high aromatic structure and prevention of free rotation around main chain single bonds led to increased gas permeability. The disclosure is so broad that one is not adequately or fully instructed to enable a skilled person to determine which particular structure or structures would give the more desirable gas permeability and selectivity without extensive study and experimentation.

In US-E-30 351, filed May 18, 1976 by H. H. Hoehn et al. (reissued on July 29, 1980), which is the reissue of US-A-3 899 309 (issued on August 12, 1975) there are broadly disclosed separation membranes of aromatic polyimides, polyesters, and polyamides. The invention broadly described and claimed in these patents requires that the polymer aromatic imide, aromatic ester, or aromatic amide repeating unit must meet certain requirements, namely:

(a) it contains at least one rigid divalent subunit, the two main chain single bonds extending from which are not colinear,

(b) is sterically unable to rotate 360° around one or more of said main chain single bonds, and

(c) more than 50% of the atoms in the main chain are members of aromatic rings.

These requirements are set forth in US-E-30 351 in the Abstract; at column 1, lines 40 to 53; in claim 1 and in all claims dependent upon claim 1. The manner in which requirement (a) is determined is set forth in column 2, lines 51 to 68; the determination of requirement (b) is described in column 3, lines 1 to 28; and the determination of requirement (c) is described in column 3, lines 29 to 56; with column 3, lines 57 to 68 explaining how the requirements were determined in the examples. Thus, for a polymer to be within the orbit of the invention described and claimed in US-E-30 351 it must meet all three criteria or requirements defined in the patent. Should it fail to meet all three requirements it cannot be considered a polymer falling within the orbit of the invention. Requirement (b) of US-E-30 351 restricts the membranes to those from polymers in which the polymer chain contains at least one rigid monolinear bond between rigid subunits around which subunit the polymer chain is sterically prevented from rotating 360° and specifically describes the manner in which this can be ascertained by the use of a clearly identified, readily available molecular model kit. Thus, a polymer structure assembled from the identified kit which is not sterically prevented from rotating 360°C cannot be considered as being within the scope of US-E-30 351.

US-E-30 351 defines the polyesters alleged to meet the requirements (a), (b), and (c) at column 2, lines 21 to 34; column 6, lines 26 to 56; column 7, lines 19 to 29 and 42 to 53 and column 11 line 62 to column 12, line 68 (Tables III and IV), with specific examples of polyesters and their membranes being shown in Examples 1-5, 9-12 and 22. The use of polyester membranes in the process is claimed in claims 1 and 8 to 13; with claims 12 and 13 being duplicates. The membranes of the invention are said to be in film form or hollow fiber form, column 4, lines 10 to 15 and lines 43 to 46 and it is stated they can be uniform membranes (column 4, lines 47 to 49) or asymmetric membranes (column 4, lines 49 to 54).

In US-A-3 822 202, issued to H. H. Hoehn on July 2, 1974, the same polyimide, polyester and polyamide polymers are disclosed as suitable for use as membranes but in this patent the membranes are subjected to a heat treatment in an environment of air or an inert gas under vacuum at a temperature range of 150 °C up to just below the softening point of the polymer. In all of US-A-3 822 202 there is no mention of composite membranes and the only example in US-A-3 822 202 employing a polyester membrane is Example 21, which uses an air dried flat film 0.055 mm (2.15 mils) thick.

In EP-A-0 242 147, Aneda et al. there are disclosed gas separation membranes based on polycarbonate polymers derived from bisphenols and their use in gas separation processes. The membranes are alleged to have particular application in separating oxygen from nitrogen, but they are not polyesters.

EP-A-0 244 146, Anand et al., disclosed membranes based on polyestercarbonate polymers in which the polymer backbone is a tetrabromo diphenolic residue, and the use of the polymers in gas separation processes, but they are not polyesters.

Both of these European Patent Applications are based on polycarbonate polymers containing the carbonate group:

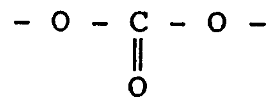

in the polymer chain. The presence of this carbonate link is an essential element of the inventions disclosed and is to be distinguished over the polyesters which contain the ester group:

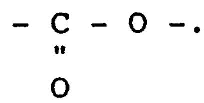

US-A-4 840 646, issued to J.N. Anand, et al., also discloses membranes based on polyestercarbonates and their uses in gas separation processes. However, the patent does not disclose polyesters of tetrabromobisphenol A alone. In US-A-4 840 646, the esterification reaction product is treated with phosgene to form carbonate units and the membranes are polyestercarbonate membranes, not polyesters. The polyestercarbonate of Example 7 of US-A-4 840 646 is reported as having a high oxygen/nitrogen separation factor of 8 and a rather low permeability for oxygen of 1.4 Barrers. In contrast, the preferred polyesters of this invention generally have significantly higher oxygen permeabilities with only a relatively small decrease in oxygen/nitrogen selectively. The higher permeability is generally considered commercially important.

JP-A-53-66880, published June 14, 1978, Shoji Ueno et al., discloses membranes based on aromatic polyesters produced from aromatic dicarboxylic acids and bisphenols of the structure:

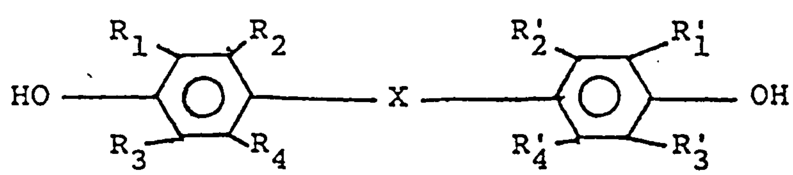

wherein $R_{1-4}$ and $R'_{1-4}$ are hydrogen, halogen or hydrocarbon; and X is either -O-, $-SO_2-$, -CO-, -S-, alkylene, or alkylidene. All of the bisphenols disclosed and discussed as suitable contain one of the defined X groups as the linking or bridging group. The tetrabromobishphenol A structure is disclosed in the above general structure, but specific examples of its use are not given.

Tetrabromobisphenol polyesters having an iso/tere proportion in the range of 70:30 to 30:70 are known from EP-A-0 003 294 which teaches to use such polyesters for the production of optical elements, such as lenses for photo- and movie-cameras.

Films of a halogenated aromatic polyester derived from the reaction of an aromatic acid halide selected from the group consisting of terephthaloyl halide, isophthaloyl halide and mixtures thereof, and of a bisphenol having the structural formula

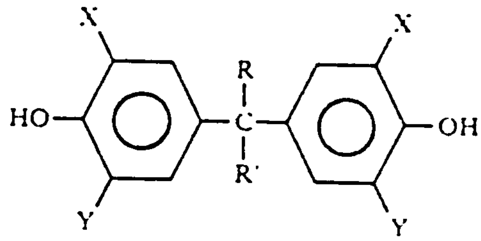

wherein X is chlorine or bromine and Y is hydrogen, chlorine or bromine, with the provision that when X is chlorine, Y is hydrogen or chlorine and when X is bromine, Y is hydrogen or bromine, R and R' may be the same or different and represent hydrogen, lower alkyl groups, or together constitute a cyclic hydrocarbon group, is known from US-A-4 322 521. In this bisphenol X may be a bromine group, whilst R and R' may be methyl groups. The aromatic acid halide particularly may be a mixture of from about 45 to about 75 percent by weight isophthaloyl chloride and correspondingly from about 55 to about 25 percent by weight terphthaloyl chloride.

## Summary of the Invention

This invention, in conformity with one aspect thereof, comprises the use of a polyester or copolyester derived from the reaction of an aromatic dicarboxylic acid or derivative thereof and 50 mole percent or greater of tetrabromobisphenol A of the general formula:

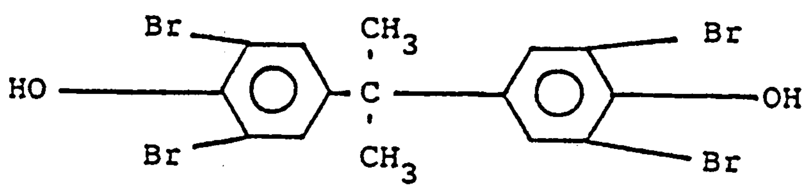

(I)

wherein said aromatic dicarboxylic acid or derivative thereof comprises isophthalic acid or its dichloride and/or 4-bromoisophthalic acid or its dichloride and terephthalic acid or its dichloride and/or 2-bromoterephthalic acid or its dichloride as the dicarboxylic acid compound; wherein the mole ratio of said iso/tere dicarboxylic acid compounds is from about 80:20 to about 20:80, in the manufacture of a thin layer gas separation membrane.

This invention, in conformity with a further aspect thereof, comprises a process for separating a component from a gas mixture containing said component which comprises contacting said gas mixture with one side of a gas separation membrane comprising a thin layer of a polyester or copolyester derived from the reaction of an aromatic dicarboxylic acid or derivative thereof and 50 mole percent or greater of a tetrabromobisphenol A (I) of the general formula:

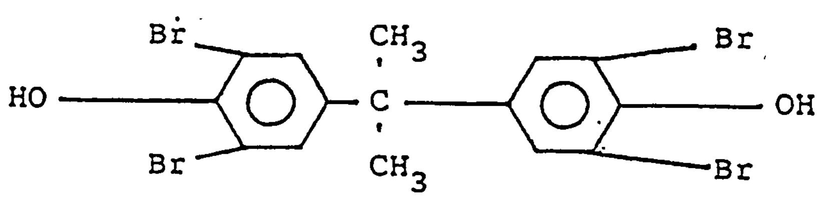

(I)

wherein said aromatic dicarboxylic acid or derivative thereof comprises isophthalic acid or its dichloride and/or 4-bromoisophthalic acid or its dichloride and terephthalic acid or its dichloride and/or 2-bromoterephthalic acid or its dichloride as the dicarboxylic acid compund, wherein the mole ratio of said iso/tere dicarboxylic acid compounds is from about 80:20 to about 20:80; said membrane having a combination of high selectivity and high permeation rate values, while maintaining a pressure differential across the two

sides of the membrane and removing the permeated component from the other side of the membrane enriched in at least one component.

The subject invention also provides for a gas separation membrane comprising a thin layer of a polyester or copolyester derived from the reaction of an aromatic dicarboxylic acid or derivative thereof and a mixture of diols comprising 80 mole percent of tetrabromobisphenol A of the general formula:

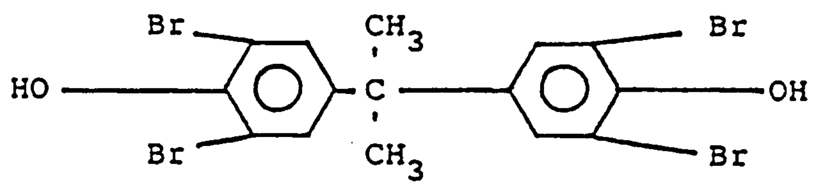

(I)

and 20 mole percent of 4,4'-[2,2,2-trifluoro-1-[trifluoromethylethylidene] -bis [2,6-dibromophenol] ] wherein said aromatic acid or derivative thereof comprises isophtalic acid or its dichloride and/or 4-bromoisophthalic acid or its dichloride and terephthalic acid or its dichloride and/or 2-bromoterephtalic acid or its dichloride as the dicarboxylic acid compound; wherein the mole ratio of said iso/tere dicarboxylic acid compounds is from about 80:20 to about 20:80; said membrane having a combination of high selectivity and high permeation rate values.

Detailed Description of the Invention

This invention provides novel improved polyester permeable membranes having exceptional gas separation properties, e.g., oxygen/nitrogen, carbon dioxide/methane and helium/methane gas separation properties with enhanced oxygen, carbon dioxide and helium permeabilities.

The preparation of polyesters is well known and several procedures can be used. Thus, it is known that they can be produced by the reaction of a dihydroxyl compound with an aromatic dicarboxylic acid or an ester-forming derivative thereof such as an acid chloride. The method for producing the polyesters comprising the gas separation membranes of this invention is not a part of this invention and any polyesterification process can be used. A typical procedure employed for preparing the polyester membranes of this invention is the reaction of the tetrabromobisphenol A (I) with terephthaloyl chloride, isophthaloyl chloride or mixtures thereof. Such a process is disclosed in US-A-3 388 097, issued to Cramer et al.

The phthaloyl compounds are used at a mole ratio of isophthaloyl to terephthaloyl compounds of from about 80:20 to about 20:80, preferably about 50:50 to about 20:80 and most preferably about 30:70 to about 20:80, with the proviso that the iso content be not less than 20 mole percent and the tere content be not more than 80 mole percent, for polyesters containing 50 mole percent or more of the tetrabromobisphenol-A (I) compound to optimize the combination of gas permeability and separation of gases. In addition, as is known to those skilled in this art, a small amount of another suitable aromatic dicarboxylic acid, the acid chloride or the ester can be used in the polyesterification process; further, a small amount of the aromatic dicarboxylic acid component can be replaced with an aliphatic dicarboxylic acid; these small amounts added should be in quantities that do not have any significant deleterious effect on permeability and/or selectivity. Further, one can use mixtures of the tetrabromobisphenol A of Formula I with small amounts of other bisphenols or other aromatic and/or aliphatic diols with up to about 10 mole percent of tetrabromobisphenol-A (I) being replaced by other bisphenols or such diols. The preferred polyesters are those produced by the condensation polymerization of the tetrabromobisphenol A of Formula I with terephthalic acid, isophthalic acid, or mixtures thereof, or esters thereof, or the acid chlorides. The Encyclopedia of Polymer Science & Technology, Mark et al. Editors, John Wiley and Sons, Interscience Division, N.Y., N.Y., publishers, 1969, Volume 11, pages 1 to 168, contains a description of the many processes known for the preparation of polyesters. In view of the extensive knowledge of these polymers, there is no need for any detailed description of the specific reactants that have been described above nor of the reaction conditions required for the polyesterification reaction. This technical material is well known to those of ordinary skill in the polyester art.

In order to produce the gas separation membranes of this invention a thin layer consisting predominantly of a polyester or copolyester derived from tetrabromobisphenol A of the formula:

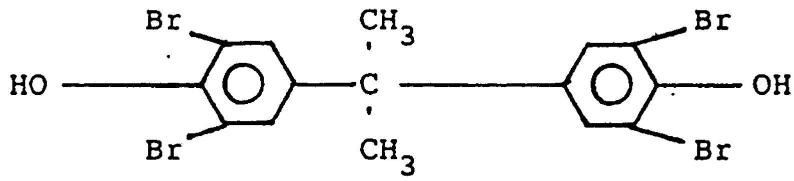 (I)

is used.

The bisphenol diol component of the polyesters or copolyesters constitutes 50 mole percent or more of tetrabromobisphenol A (I), preferably at least about 60 mole percent of the tetrabromobisphenol A (I), and most preferably at least about 80 mole percent of the tetrabromobisphenol A (I) in admixture with other known bisphenols, but it also can be 100 mole percent of said structure (I). The diols, thus, can be mixtures of 50 mole percent or more of the tetrabromobisphenol A (I) and 50 mole percent or less of another bisphenol, such as, for example, tetrabromohexafluorobisphenol A. These other bisphenols are well known to those skilled in this art and require no further description for such an individual to understand what they are.

The tetrabromobisphenol A (I) used in producing the polyester gas separation permeable membranes makes up at least 50 mole percent or more of the dihydroxyl compound used to produce the polyesters, as stated above. The polyesters or copolyesters are the reaction products of at least 50 mole percent or more of said tetrabromobisphenol A (I) reacted with about 20 mole percent or more of isophthaloyl dichloride and/or 4-bromoisophthaloyl dichloride and 80 mole percent or less of terephthaloyl dichloride and/or 2-bromoterephthaloyl dichloride as the dicarboxylic acid compound.

The polyester gas separation membranes of this invention contain as the predominant recurring unit the group having the structural formula:

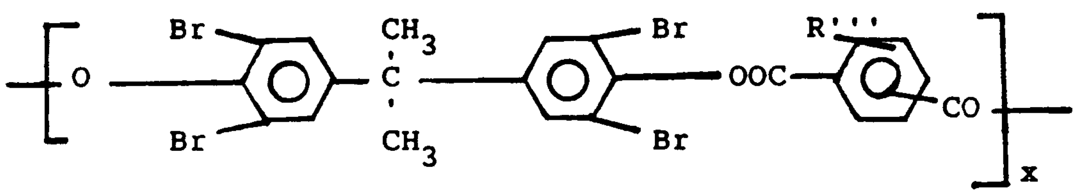

wherein R''' is hydrogen or bromine and x is an integer having a value of at least about 20 up to about 200 or more, preferably from about 25 to about 175. The polyester preferably has a weight average molecular weight of from about 20,000 to about 150,000, most preferably from about 30,000 to about 125,000.

The gas separation membrane of this invention can be of dense film or of any form known to those skilled in the art. Further, it can be a composite membrane, an asymmetric membrane, or a homogeneous membrane or isotropic membrane. The membranes may be in spiral form, flat sheet, tubular form, or other configurations, as well as in hollow fiber form. Those skilled in the art are aware of the many methods available for their production and know how to prepare the membranes in any of these forms. The preferred membranes of this invention are the asymmetric or composite membranes, with separation layers less than 1,000 nm (10,000 Angstroms) thick preferably less than 500 nm (5,000 Angstroms) thick, most preferably from about 20 to about 200 nm (about 200 to about 2,000 Angstroms) thick.

The isotropic and asymmetric type membranes are generally comprised essentially of a single permeable membrane material capable of selective gas separations, such as, oxygen/nitrogen and carbon dioxide/methane separations. Asymmetric membranes are distinguished by the existence of two or more morphological regions within the membrane structure; one such region comprising a thin relatively dense semipermeable skin capable of selectively permeating at least one component from the gas mixture containing said at least one component in admixture with other components, and the other region comprising a less dense, porous, essentially non-selective support region that serves to preclude the collapse of the thin skin region of the membrane during use. Composite membranes generally comprise a thin layer or coating of the polyester semipermeable membrane material superimposed on a porous substrate.

Flat sheet membranes are readily prepared from polyester solutions in a suitable solvent, e.g. methylene chloride, by casting the solution and evaporating the solvent, and thereafter drying and curing the cast film under vacuum at elevated temperature. Such thin film membranes can vary in thickness from

about 0.013 mm to about 0.254 mm (about 0.5 mil to about 10 mils) or more, preferably from about 0.025 mm to about 0.076 mm (about 1 mil to about 3 mils).

Flat sheet membranes are generally not the preferred commercial form. In large scale commercial applications hollow fiber permeable membranes are generally more desirable because they provide a significantly larger surface area per volume unit when fabricated as modules. The porous hollow fiber permeable membranes comprise a porous hollow fiber support having a permeable membrane layer on the surface thereof. The methods for their production are well known (See for example, "Hollow Fibers Manufacture and Applications", ed. J. Scott, Noyes Data Corporation, N.J., 1981, p. 264 et seq.)

The tetrabromobisphenol A (I) type polyester permeable separation membranes of this invention exhibit a high separation factor for oxygen over nitrogen from air mixtures of at least about 7 coupled with a permeability rate or flux of at least about 1.4 Barrers and a high separation factor for carbon dioxide over methane in mixtures containing said gases. The ability of these membranes to separate these components with a combination of both very high separation factors and good permeability rates was completely unexpected and is superior to the results often exhibited by many existing membranes in the art. Thus, for example, the more optimum polycarbonate membranes disclosed in US-A-4 818 254 (shown as items 5 and 6 in Table I of this application) have oxygen permeabilities of 1.87 and 0.85 Barrers with oxygen/nitrogen separation factors of 6.9 and 7.4 respectively. Polyester-carbonate membranes disclosed in US-A-4 840 646 (shown as items 1 to 4 in Table I of this application) have oxygen permeabilities of 0.96, 1.23, 1.4 and 1.4 Barrers with oxygen/nitrogen separation factors of 7.2, 7.2, 6.3 and 8.0 respectively. The high isophthalate ester polyestercarbonate in Example 7 of US-A-4 840 646 (item 4 of our Table I) shows the highest combination of oxygen permeability of 1.4 Barrers and oxygen/nitrogen separation factor of 8.0. A high isophthalate ester content of 80 mole percent in said Example 7 exhibits a much higher oxygen/nitrogen selectivity of 8.0 than the 50 mole percent isophthalate ester content of Example 6 of US-A-4 840 646 (item 3 of our Table I) at the same Percent Ester level with an oxygen/nitrogen selectivity of 6.3 with no improvement in oxygen permeability of 1.4 Barrers, as shown for Examples 6 and 7 in US-A-4 840 646 (items 3 and 4 of our Table I, infra).

Therefore, it was completely unexpected and surprising to find that high terephthalate content in the tetrabromobisphenol A polyester, and certain copolyesters, membranes of this invention, as shown in the experimental data of our examples show a combination of both very high oxygen/nitrogen selectivity and significantly improved oxygen permeation rates compared to that of the prior art. These data of our examples are summarized as items 8 to 11 in Table I, infra. The economic advantages of maintaining high oxygen/nitrogen gas selectivity and greatly improved oxygen permeability are obvious in this technological field. For the favored compositions of this invention oxygen permeabilities of 1.6, 1.93 and 3.1 Barrers and oxygen/nitrogen gas selectivities of 7.7, 7.5 and 7.2, respectively, were obtained.

It was unexpectedly and unpredictably found that high mole percentages of terephthalic acid ester in polyester of tetrabromobisphenol A (I) increases their oxygen permeability over that of polyesters with high amounts of isophthalic acid esters with minor reductions in the oxygen/nitrogen gas selectivity; most preferably the terephthalic acid ester component should comprise about 80 mole percent of the phthalic acid esters.

Copolyesters based on 50 or 80 mole percent of tetrabromobisphenol A (I) with other bisphenols, such as tetrabromohexafluorobisphenol A will also provide useful gas separation membranes.

Polyesters based on tetrabromobisphenol A have been disclosed previously in the Hoehn et al. patents, US-A-3 899 309 and US-E-30 351, but they do not specifically anticipate or suggest the unexpected and unpredictable improvements provided for oxygen/nitrogen, carbon dioxide/methane and helium methane separations achieved by the polyester membranes of this invention. In the Hoehn et al. patents, tetrabromobisphenol A (I) is identified as compound 25 in Table III, however, there is no specific example showing its use in the preparation of any polymer. These reference patents do show the use of other bisphenols in the preparation of polyesters and Claim 11 of US-A-3 899 309 discloses an isophthalate/terephthalate polyester based on tetrabromohexafluorobisphenol. In column 8, lines 32-35, of this patent, the particularly favored polyesters are those having a high isophthalate content of 70 mole percent and a low terephthalate content of 30 mole percent, in contrast to the much higher terephthalate content of the polyesters of this invention.

The data in Table I show that the specific polyesters and copolyesters of this invention provide an incomparable combination of extremely good oxygen/nitrogen separation factors and high oxygen gas permeability when compared with previously known examples in the literature.

TABLE I

| COMPARISON OF GAS MEMBRANES FOR OXYGEN/NITROGEN SEPARATIONS | | | | | |
|---|---|---|---|---|---|
| Item | Bisphenol(s) (Mole %) | Polymer | Ratio Iso/Tere (% Ester) | Permeability (Barrers) $P(O_2)$ | Separation Factor $O_2/N_2$ |
| 1 | TBrBA(100) | PEC (a) | 90/10 (50) | 0.96 | 7.2 |
| 2 | TBrBA(100) | PEC (a) | 20/80 (80) | 1.23 | 7.2 |
| 3 | TBrBA(100) | PEC (a) | 50/50 (95) | 1.4 | 6.3 |
| 4 | TBrBA(100) | PEC (a) | 80/20 (95) | 1.4 | 8.0 |
| 5 | TBrBA(50) TMBA(50) | PC (b) | - | 1.87 | 6.9 |
| 6 | TBrBA(100) | PC (c) | - | 0.85 | 7.4 |
| 7 | TClBA | PE (d) | 100/0 | 1.79 | 5.5 |
| 8 | TBrBA(50) TBrF6BA(50) | PE (e) | 80/20 | 3.1 | 7.2 |
| 9 | TBrBA | PE (e) | 80/20 | 1.4 | 8.0 |
| 10 | TBrBA | PE (e) | 50/50 | 1.6 | 7.7 |
| 11 | TBrBA | PE (e) | 25/75 | 1.93 | 7.5 |
| 12 | Polysulfone | (f) | - | 1.2 | 5.9 |
| 13 | Cellulose Acetate | (f) | - | 1.0 | 5.5-6.5 |

TBrBA Tetrabromobisphenol A
TClBA Tetrachlorobisphenol A
TMBA Tetramethylbisphenol A
TBrF6BA Tetrabromohexafluorobisphenol A
PEC (a) TBrBA polyester carbonate of US-A-4 840 646
PC (b) TBrBa/TMBA (50/50) polycarbonate of US-A-4.818.254
PC (c) TBrBA (100) polycarbonate of US-A-4,818,254
PE (d) TClBA polyester of US-A-3 899 309 and US-E-30 351.
PE (e) Polyester of Examples 1 to 4 of this application
(f) Commercial separation membrane

Carbon dioxide/methane separations have been difficult because factors which lead to high carbon dioxide permeability yield low carbon dioxide/methane separation factors. Table II shows that the commercially available membranes based on cellulose acetate and polysulfone yield good separations for this gas pair but the permeability for carbon dioxide is low and needs to be higher for more commercially economical operations. The tetramethylbisphenol A polycarbonate (TMBAPC) appears to have the best combination of permeability and separation factor reported in the literature but the combination is not as good as the polyester of tetrabromobisphenol A (I) of this invention.

Structures of this invention exhibit a combination of high permeability and carbon dioxide/methane separations based on pure/mixed gas measurements. In the optimum structure for carbon dioxide/methane separations the copolyester of tetrabromobisphenol A (I) with high isophthalic acid ester yields the best separation and permeability combination. Surprisingly an unusually high carbon dioxide permeability is seen in this 80/20 isophthalic/terephthalic acid ester ratio and the mixture of bisphenol compounds (Run 3 of Table II) with essentially no significant decrease in gas selectivity for carbon dioxide/methane. This remarkable doubling of the carbon dioxide permeability without a significant decrease in gas selectivity was not expected.

TABLE II

| Comparison of Gas Membranes for Carbon Dioxide/Methane Separation | | | | |
|---|---|---|---|---|
| Bisphenol | | Ratio Iso/Tere | Permeability $P(CO_2)$ | Separation Factor $CO_2/CH_4$ |
| 1. | TBrBA(I) | 80/20 | 5.9 | 47 |
| 2. | TBrBA(I) | 50/50 | 6.4 | 42 |
| 3. | TBrBA(I) TBr6FB | 80/20 | 13 | 47 |
| 4. | Dow TMBA PC* | -- | 16.3 | 26.7 |
| 5. | Polysulfone | | 5.5 | 26.0 |
| 6. | Cellulose Acetate | | 6 | 30.0 |

Run 3 is a 1:1 mole mixture of TBrBA(I) and TBr6FB
TBrBA(I) Tetrabromobisphenol A (I)
TBr6FB Tetrabromohexafluorobisphenol A

* US-A-4 818 254

Note that the tetrabromobisphenol A membranes of this invention have substantially improved selectivity or separation factor for carbon dioxide/methane separation compared to the other known polymeric membranes.

Although the data are limited on the various combinations of isophthalic/terephthalic acid ester ratios in the copolymers they do show that we can vary the permeability and gas selectivity by varying the tetrabromobisphenol A (I) content and by analogy with the above examples the isophthalic/terephthalic acid ester ratio, as shown in the experimental section.

The reduced viscosities of the polyesters were determined at 25°C using a polymer solution containing 0.200 g of polymer per 100 ml of chloroform and calculated by the equation

$$RV = \frac{A - B}{(C)(B)}$$

wherein A is the time it takes the sample of chloroform solution to travel through the viscometer, B is the time it takes chloroform to travel through the viscometer and C is the weight of the sample of chloroform solution.

The polyesters of this invention were film forming at a reduced viscosity in chloroform of about 0.25 and above. For gas permeable processes the polyesters having viscosities of about 0.25 or higher provide adequately strong films of about 0.05 mm to about 0.13 mm (about 2 mils to about 5 mils) thick; preferred viscosities are from about 0.25 to about 1.6, most preferably from about 0.45 to about 1.3. The film thickness can vary from about 0.025 mm to about 0.25 mm (about 1 mil to about 10 mils, preferably from about 0.05 mm to about 0.13 mm (about 2 mils to about 5 mils). The polyesters can also be used to prepare hollow fiber membranes following the procedures known in the art.

The gas permeability or permeation rate P measurements of the flat film membranes evaluated in the following examples were determined at 25°C by placing a small disc of the polymer membrane film of known thickness in a constant volume - variable pressure permeation cell. Both sides of the membrane were degassed under vacuum overnight and one side of the membrane was then exposed to the gas at 274 kPa (25 psig). The permeate gas was collected in a reservoir on the other side of the membrane and the gas pressure was measured using a sensitive transducer. The pressure build-up as a function of time was recorded on a strip chart and the data was used to determine the steady state permeation rate P. The permeability rate P is reported in Barrer units, a Barrer unit being:

$$(cm^3\ (STP)\ cm/cm^2\text{-sec. cm Hg})\ X\ 10^{-10}\ \text{or}$$
$$(cm^3\ (STP)\ cm/cm^2\text{-sec. 1.333 kPa})\ X\ 10^{-10}$$

The membranes were prepared from 2 to 10 weight percent polymer solutions in methylene chloride and were from about 0.05 mm to about 0.25 mm (about 2 to about 10 mils) thick. The solvent was removed

under vacuum at 40 ° C and finally at 125 ° C for 5 days before evaluation.

The following examples serve to further illustrate the invention. In the examples the aromatic dicarboxylic acid derivatives used were terephthaloyl chloride and isophthaloyl chloride or mixtures thereof, unless otherwise stated. Parts are by weight unless otherwise indicated.

The flat membranes were prepared from 3 to 7 weight percent polymer solutions in methylene chloride. A portion of the solution was poured onto a glass plate and kept covered overnight with an aluminum lid at ambient conditions. The film was stripped off the plate and dried in a vacuum oven at 40 ° C for one day. Then the film was further dried at 125 ° C in vacuum for 5 days and its thickness measured. The membrane was tested at 25 ° C and 2 bar (2 atmospheres) pressure for pure gas, oxygen, nitrogen, carbon dioxide, helium, and methane permeabilities.

The polyesters were prepared by known interfacial polymerization procedures in a Waring Blender and in a three-necked round bottom flask with mechanical stirring and cooling with an ice bath. The stir rate was not always monitored, but it was generally about 1000 rpm. The rate of addition of the acid chloride was based on the control of the exotherm. As is well known in the literature ("Condensation Polymers by Interfacial and Solution Methods, Chapter VII, Paul W. Morgan, Interscience Publishers, 1965.), if everything else is constant, the molecular weight is higher the faster the acid chlorides are added to the reaction mixture. Also faster stir rates are significantly helpful and the use of a Morton flask appeared to help obtain higher molecular weights.

Example 1

A. Preparation of Polyarylate From 2,2-bis(3,5-Dibromo-4-Hydroxyphenyl)propane and An 80/20 Molar Mixture of Isophthaloyl Chloride and Terephthaloyl Chloride.

To a 3-necked 500 ml round bottom Morton flask equipped with a mechanical stirrer, thermometer, addition funnel, nitrogen inlet and condenser there were added 21.76 grams of 2,2-bis(3,5-dibromo-4-hydroxyphenyl)propane, 0.4 gram of tetrabutyl ammonium hydrogen sulfate, 10.25 grams of 45.9% aqueous potassium hydroxide and 80 ml of distilled water, and 40 ml of methylene chloride. With ice water cooling, a solution of 6.5 grams of isophthaloyl chloride and 1.63 grams of terephthaloyl chloride in 80 ml of methylene chloride was added in about 15 minutes with very fast stirring. After stirring for about 2 hours, 100 ml of methylene chloride was added and the mixture acidified by adding 0.5% sulfuric acid. The polymer solution was washed three times with 2000 ml of distilled water. The polymer was coagulated in methanol and dried in a vacuum oven at 80 ° C overnight. The yield was 25.2 grams of polyester. The reduced viscosity was 1.67.

B. A gas permeable flat membrane having a thickness of 0.073 mm (2.86 mils) was prepared and evaluated for separation of oxygen, nitrogen, carbon dioxide, methane and helium.

The oxygen P = 1.4 ($x10^{-10}cm^3$(STP)-cm/$cm^2$-sec-cmHg (Barrers). The oxygen/nitrogen selectivity was 8.0.

The carbon dioxide P = 5.9 Barrers and the carbon dioxide/methane selectivity at 241 kPa (35 psia) using pure gases was 47.

The helium P = 18.3 Barrers and the helium/methane selectivity was 146.

Similar results are obtained using brominated phthaloyl chlorides, in whole or in part, in producing the polyarylate.

Example 2

A. Preparation of Polyarylate From 2,2-bis(3,5-Dibromo-4-Hydroxyphenyl)propane and a 50/50 Molar Mixture of Isophthaloyl Chloride and Terephthaloyl Chloride.

Essentially the same procedure as in Example 1 was used except that 4.06 grams each of isophthaloyl dichloride and terephaloyl dichloride were charged. The yield of polyester was 24.9 grams; the reduced viscosity was 1.23.

B. A gas permeable flat membrane having a thickness of 0.055 mm (2.17 mils) was prepared and evaluated for the permeation of oxygen, nitrogen, carbon dioxide, methane and helium.

The oxygen P = 1.57 (Barrers). The oxygen/nitrogen selectivity was 7.7.

The carbon dioxide P = 6.4 Barrers and the carbon dioxide/methane selectivity using pure gases was 42.

The helium P = 18.7 Barrers and the helium/methane selectivity was 122.

Similar results are obtained using brominated phthaloyl chlorides, in whole or in part, in producing the polyarylate.

Example 3

A. Preparation of Polyarylate from 2,2-bis(3,5-Dibromo-4-Hydroxyphenyl)propane and a 25/75 Molar Mixture of Isophthaloyl Chloride and Terephthaloyl Chloride.

The synthesis procedure was essentially the same as in Example 1 except that 2.03 grams of isophthaloyl chloride and 6.1 grams of terephthaloyl chloride were used. The yield of polyester was 27.4 grams and the reduced viscosity was 1.26.

B. A gas permeable flat membrane having a thickness of 0.038 mm (1.5 mils)was prepared and evaluated for the permeation of oxygen and nitrogen.

The oxygen P = 1.93 Barrers and the oxygen/nitrogen selectivity was 7.5.

Example 4

A. Preparation of Polyarylate Copolymer From a 50/50 Molar Mixture of 4,4'-[2,2,2-Trifluoro-1-(Trifluoromethyl)ethylidene]bis[2,6-Dibromophenol](T Br6FB) and 2,2-bis(3,5-Dibromo-4-Hydroxyphenyl)-propane and An 80/20 Molar Mixture of Isophthaloyl Chloride and Terephthaloyl Chloride.

A. The synthesis procedure was essentially the same as in Example 1 except that a mixture of 10.88 grams of 2,2-bis(3,5-dibromohydroxy-phenyl)propane and 13.03 grams of TBr6FB and a mixture of 6.5 grams of isophthaloyl chloride and 1.63 grams of terephthaloyl chloride were used in the esterification reaction. The yield of copolyester was 25.2 grams and the reduced viscosity was 0.65.

B. A gas permeable flat membrane having a thickness of 0.045 mm (1.77 mils) was prepared and evaluated for the permeation of oxygen, nitrogen, carbon dioxide, methane and helium.

The oxygen P = 3.1 Barrers and the oxygen/nitrogen selectivity was 7.2.

The carbon dioxide P = 13 Barrers and the carbon dioxide/methane selectivity was 47.

The helium P = 34 Barrers and the helium/methane selectivity was 123.

Similar results are obtained using brominated phthaloyl chlorides in whole or in part, in producing the polyarylate copolymer.

The permeability values (P in Barrers) and the oxygen/nitrogen selectivity, the carbon dioxide/methane selectivity and the helium/methane selectivity values for the polyesters of this invention (first four entries) as derived by the instant inventors and of comparative data from US-A-4 840 646 (last four entries) and other prior art (entries 5 through 10) are summarized in TABLE III.

TABLE III

| Ex. | Selectivity | | | P (Barrers) | | |
|---|---|---|---|---|---|---|
| | $O_2/N_2$ | $CO_2/CH_4$ | $He/CH_4$ | $O_2$ | $CO_2$ | He |
| 1 | 8.0 | 47 | 146 | 1.4 | 5.9 | 18.3 |
| 2 | 7.7 | 42 | 122 | 1.57 | 6.4 | 18.7 |
| 3 | 7.5 | | | 1.93 | | |
| 4 | 7.2 | 47 | 123 | 3.1 | 13.0 | 34 |
| Ex 1 (EPA-7) | 7.4 | | | 0.8 | | |
| Ex 6 (EPA-7) | 5.0 | | | 3.9 | | |
| Ex 4 (EPA-6) | 7.2 | | | 1.23 | | |
| Ex 2 (EPA-7) | 6.3 | | | 1.448 | | |
| Ex 6 (EPA-7) | 5.0 | 26.7 | | 3.9 | 16.3 | |
| Ex 3* | 6.7 | 33 | | 1.08 | 4.75 | |
| Ex 4* | 7.2 | 39 | | 1.23 | 5.26 | |
| Ex 6* | 6.3 | | | 1.4 | | |
| Ex 7* | 8.0 | | | 1.4 | | |

Footnotes:
EPA-7 = EP-A-0 242 147
EPA-6 = EP-A-0 244 126
* = From US-A-4 840,646, Data in Table at columns 13-14.

## Claims

1. Use of a polyester or copolyester derived from the reaction of an aromatic dicarboxylic acid or derivative thereof and 50 mole percent or greater of tetrabromobisphenol A of the general formula:

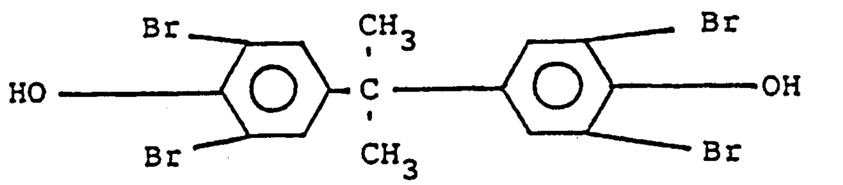

(I)

wherein said aromatic dicarboxylic acid or derivative thereof comprises isophthalic acid or its dichloride and/or 4-bromoisophthalic acid or its dichloride and terephthalic acid or its dichloride and/or 2-bromoterephthatic acid or its dichloride as the dicarboxylic acid compound; wherein the mole ratio of said iso/tere dicarboxylic acid compounds is from about 80:20 to about 20:80, in the manufacture of a thin layer gas separation membrane.

2. A process for separating a component from a gas mixture containing said component which comprises contacting said gas mixture with one side of a gas separation membrane comprising a thin layer of a polyester or copolyester derived from the reaction of an aromatic dicarboxylic acid or derivative thereof and 50 mole percent or greater of a tetrabromobisphenol A (I) of the general formula:

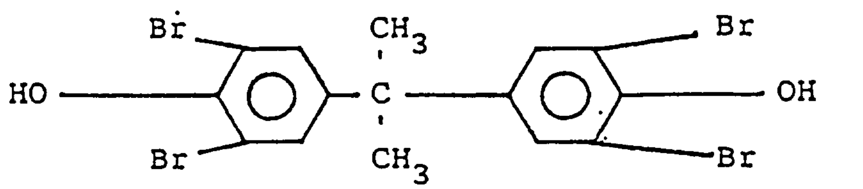

(I)

wherein said aromatic dicarboxylic acid or derivative thereof comprises isophthalic acid or its dichloride and/or 4-bromoisophthalic acid or its dichloride and terephthalic acid or its dichloride and/or 2-bromoterephthalic acid or its dichloride as the dicarboxylic acid compound, wherein the mole ratio of said iso/tere dicarboxylic acid compounds is from about 80:20 to about 20:80; said membrane having a combination of high selectivity and high permeation rate values, while maintaining a pressure differential across the two sides of the membrane and removing the permeated component from the other side of the membrane enriched in at least one component.

3. A process as claimed in claim 2 wherein said polyester or copolyester is derived essentially from said aromatic dicarboxylic acid or derivative thereof and a mixture of diols comprising 50 mole percent or greater of said tetrabromobisphenol A (I) and 50 mole percent or less of another bisphenol.

4. A process as claimed in claim 2 wherein said tetrabromobisphenol A (I) comprises 100 mole percent of said bisphenol diol.

5. A Process as claimed in claim 3, wherein said tetrabromobisphenol A (I) comprises at least about 80 mole percent of the mixture of said diols.

6. A process as claimed in claim 2 wherein said dicarboxylic acids comprise 80 mole percent isophthalate and 20 mole percent terephthalate.

7. A process as claimed in claim 2 wherein the mole ratio of said iso/tere dicarboxylic acid compounds is from about 50:50 to about 20:80.

8. A process as claimed in claim 2 wherein the mole ratio of said iso/tere dicarboxylic acid compounds is from about 30:70 to about 20:80.

**9.** A process as claimed in claim 2 wherein said gas mixture comprises oxygen and nitrogen.

**10.** A process as claimed in claim 2 wherein said gas mixture comprises air.

**11.** A process as claimed in claim 2 wherein said gas mixture is a mixture comprising carbon dioxide and methane.

**12.** A process as claimed in claim 2 wherein said gas mixture is a mixture comprising helium and methane.

**13.** A process as claimed in claim 3 wherein said another bisphenol is 4,4'-[2,2,2-trifluoro-1-[trifluoromethylethylidene)bis -[2,6-dibromophenol].

**14.** A process as claimed in claim 2 wherein the predominant recurring unit of said polyester has the structural formula:

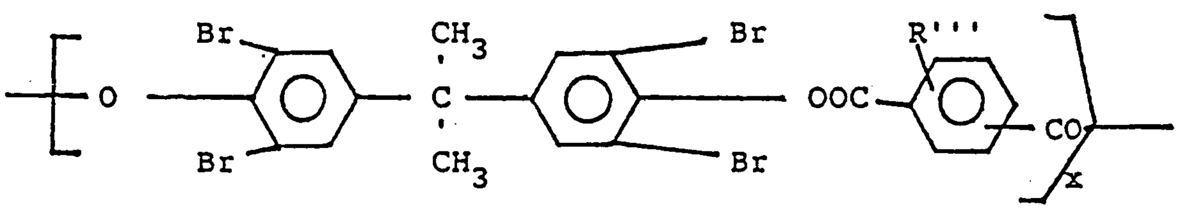

wherein x is an integer having a value of at least about 20 and R''' is hydrogen or bromine.

**15.** A gas separation membrane comprising a thin layer of a polyester or copolyester derived from the reaction of an aromatic dicarboxylic acid or derivative thereof and a mixture of diols comprising 50 or 80 mole percent of tetrabromobisphenol A of the general formula:

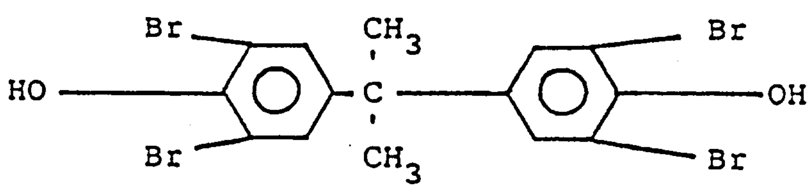 (I)

and 20 or 50 mole percent of 4,4'-[2,2,2-trifluoro-1-[trifluoromethylethylidene]-bis [2,6-dibromophenol]] wherein said aromatic acid or derivative thereof comprises isophtalic acid or its dichloride and/or 4-bromoisophtalic acid or its dichloride and terephthalic acid or its dichloride and/or 2-bromoterephtalic acid or its dichloride as the dicarboxylic acid compound; wherein the mole ratio of said iso/tere dicarboxylic acid compounds is from about 80:20 to about 20:80; said membrane having a combination of high selectivity and high permeation rate values.

**16.** A gas separation membrane as claimed in claim 15 wherein said dicarboxylic acids comprise 80 mole percent isophthalate and 20 mole percent terephthalate.

**17.** A gas separation membrane as claimed in claim 15 wherein the mole ratio of said iso/tere dicarboxylic acid compounds is from about 50:50 to about 20:80.

**18.** A gas separation membrane as claimed in claim 15 wherein the mole ratio of said iso/tere dicarboxylic acid compounds is from about 30:70 to about 20:80.

**19.** A gas separation membrane as claimed in claim 15 wherein the predominant recurring unit of said polyester has the structural formula:

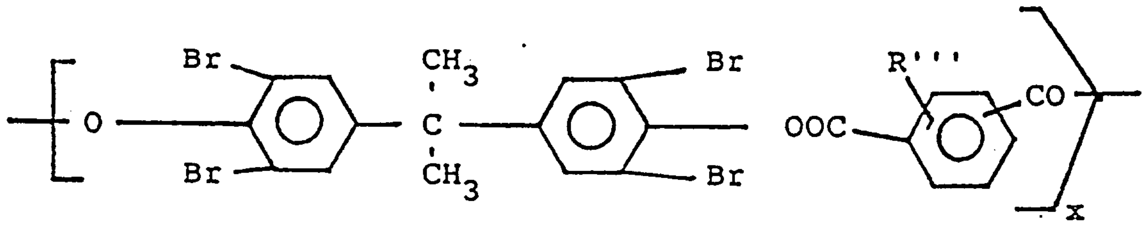

wherein x is an integer having a value of at least about 20 and R''' is hydrogen or bromine.

**Patentansprüche**

1. Verwendung eines Polyesters oder Copolyesters, der aus der Umsetzung einer aromatischen Dicarbonsäure oder eines Derivates derselben und 50 Molprozent oder mehr Tetrabrombisphenol A der allgemeinen Formel

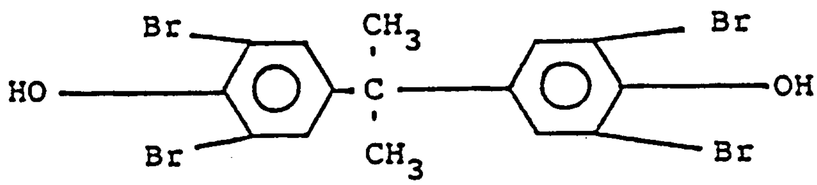

(I)

abgeleitet ist, wobei die aromatische Dicarbonsäure oder deren Derivat Isophthalsäure oder deren Dichlorid und/oder 4-Bromisophthalsäure oder deren Dichlorid und Terephthalsäure oder deren Dichlorid und/oder 2-Bromterephthalsäure oder deren Dichlorid als die Dicarbonsäureverbindung aufweist, wobei das Molverhältnis der Iso/Ter-Dicarbonsäureverbindungen zwischen etwa 80:20 und etwa 20:80 liegt, bei der Herstellung einer Dünnschicht-Gastrennmembran.

2. Verfahren zum Abtrennen einer Komponente von einem diese Komponente enthaltenden Gasgemisch, bei dem das Gasgemisch mit einer Seite einer Gastrennmembran in Kontakt gebracht wird, die eine dünne Schicht aus einem Polyester oder Copolyester aufweist, der aus der Umsetzung einer aromatischen Dicarbonsäure oder eines Derivats derselben und 50 Molprozent oder mehr Tetrabrombisphenol A (I) der allgemeinen Formel

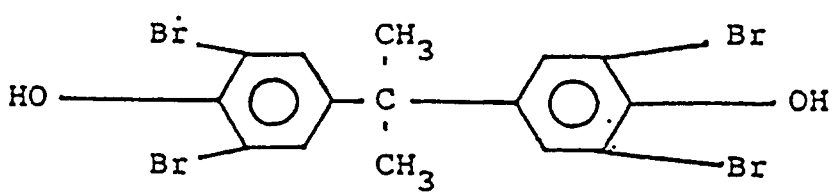

(I)

abgeleitet ist, wobei die aromatische Dicarbonsäure oder deren Derivat Isophthalsäure oder deren Dichlorid und/oder 4-Bromisophthalsäure oder deren Dichlorid und Terephthalsäure oder deren Dichlorid und/oder 2-Bromterephthalsäure oder deren Dichlorid als die Dicarbonsäureverbindung aufweist, wobei das Molverhältnis der Iso/Ter-Dicarbonsäureverbindungen zwischen etwa 80:20 und etwa 20:80 liegt, wobei die Membran sowohl hohe Selektivitätswerte als auch hohe Permeationsratenwerte hat, während eine Druckdifferenz über die beiden Seiten der Membran aufrechterhalten wird und die mit mindestens einer Komponente angereicherte permeierte Komponente von der anderen Seite der Membran abgeführt wird.

3. Verfahren nach Anspruch 2, bei dem der Polyester oder Copolyester im wesentlichen von der aromatischen Dicarbonsäure oder eines Derivats derselben und einem Gemisch von Diolen abgeleitet ist, das 50 Molprozent oder mehr des Tetrabrombisphenol A (I) und 50 Molprozent oder weniger eines weiteren Bisphenols aufweist.

4. Verfahren nach Anspruch 2, bei dem das Tetrabrombisphenol A (I) 100 Molprozent des Bisphenoldiols aufweist.

5. Verfahren nach Anspruch 3, bei dem das Tetrabrombisphenol A (I) mindestens etwa 80 Molprozent des Gemischs der Diole aufweist.

6. Verfahren nach Anspruch 2, bei dem die Dicarbonsäuren 80 Molprozent Isophthalat und 20 Molprozent Terephthalat aufweisen.

7. Verfahren nach Anspruch 2, bei dem das Molverhältnis der Iso/Ter-Dicarbonsäureverbindungen zwischen etwa 50:50 und etwa 20:80 liegt.

8. Verfahren nach Anspruch 2, bei dem das Molverhältnis der Iso/Ter-Dicarbonsäureverbindungen zwischen etwa 30:70 und etwa 20:80 liegt.

9. Verfahren nach Anspruch 2, bei dem das Gasgemisch Sauerstoff und Stickstoff aufweist.

10. Verfahren nach Anspruch 2, bei dem das Gasgemisch Luft aufweist.

11. Verfahren nach Anspruch 2, bei dem das Gasgemisch ein Kohlendioxid und Methan aufweisendes Gemisch ist.

12. Verfahren nach Anspruch 2, bei dem das Gasgemisch ein Helium und Methan aufweisendes Gemisch ist.

13. Verfahren nach Anspruch 3, bei dem das weitere Bisphenol 4,4'-[2,2,2-Trifluor-1-[trifluormethylethyliden]-bis[2,6-dibromphenol] ist.

14. Verfahren nach Anspruch 2, bei dem die vorherrschende Struktureinheit des Polyesters die Strukturformel:

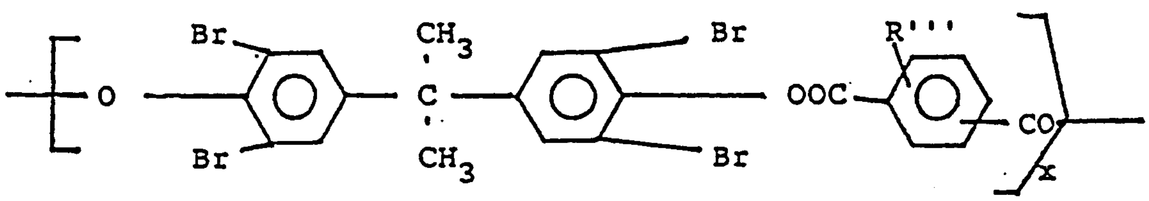

hat, wobei x eine ganze Zahl mit einem Wert von mindestens etwa 20 ist und R''' Wasserstoff oder Brom ist.

15. Gastrennmembran mit einer dünnen Schicht aus einem Polyester oder Copolyester, der aus der Umsetzung einer aromatischen Dicarbonsäure oder eines Derivats derselben und einem Gemisch von Diolen abgeleitet ist, das 50 oder 80 Molprozent Tetrabrombisphenol A der allgemeinen Formel

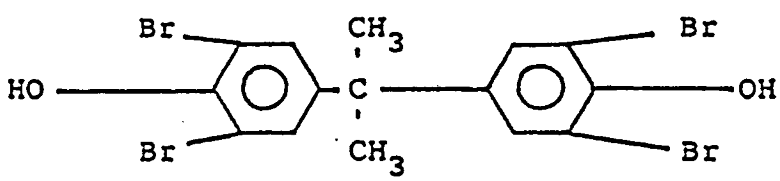 (I)

und 20 oder 50 Molprozent 4,4'-[2,2,2-Trifluor-1-[trifluormethylethyliden]-bis[2,6-dibromphenol]] aufweist, wobei die aromatische Säure oder deren Derivat Isophthalsäure oder deren Dichlorid und/oder 4-Bromisophtalsäure oder deren Dichlorid und Terephthalsäure oder deren Dichlorid und/oder 2-Bromterephthalsäure oder deren Dichlorid als die Dicarbonsäureverbindung aufweist, wobei das Molverhältnis

der Iso/Ter-Dicarbonsäureverbindungen zwischen etwa 80:20 und etwa 20:80 liegt, und wobei die Membran sowohl hohe Selektivitätswerte als auch hohe Permeationsratenwerte hat.

**16.** Gastrennmembran nach Anspruch 15, bei welcher die Dicarbonsäuren 80 Molprozent Isophthalat und 20 Molprozent Terephthalat aufweisen.

**17.** Gastrennmembran nach Anspruch 15, bei welcher das Molverhältnis der Iso/Ter-Dicarbonsäureverbindungen zwischen etwa 50:50 und etwa 20:80 liegt.

**18.** Gastrennmembran nach Anspruch 15, bei welcher das Molverhältnis der Iso/Ter-Dicarbonsäureverbindungen zwischen etwa 30:70 und etwa 20:80 liegt.

**19.** Gastrennmembran nach Anspruch 15, bei welcher die vorherrschende Struktureinheit des Polyesters die Strukturformel:

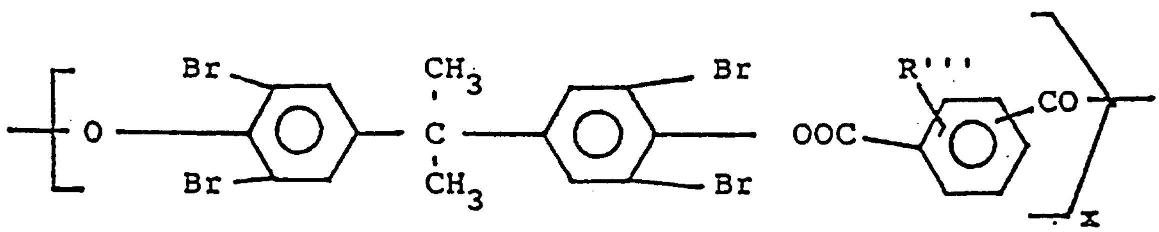

hat, wobei x eine ganze Zahl mit einem Wert von mindestens etwa 20 ist und R''' Wasserstoff oder Brom ist.

**Revendications**

**1.** Utilisation d'un polyester ou copolyester formé par réaction d'un acide dicarboxylique aromatique ou d'un de ses dérivés et d'une quantité égale ou supérieure à 50 moles % d'un tétrabromobisphénol A de formule générale :

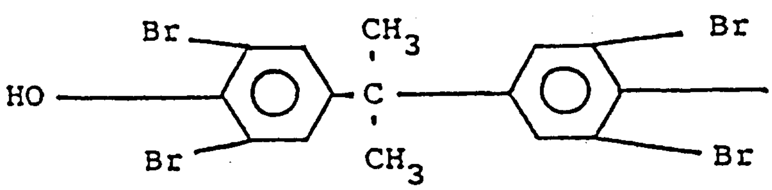

(I)

dans laquelle ledit acide dicarboxylique aromatique ou son dérivé comprend l'acide isophtalique ou son dichlorure et/ou l'acide 4-bromoisophtalique ou son dichlorure et l'acide téréphtalique ou son dichlorure et/ou l'acide 2-bromophtalique ou son dichlorure comme composé du type acide dicarboxylique ; le rapport molaire des acides iso/téré-dicarboxyliques étant compris dans l'intervalle d'environ 80:20 à environ 20:80, dans la production d'une membrane de séparation de gaz en couche mince.

**2.** Procédé pour séparer un constituant d'un mélange gazeux contenant ledit constituant, qui comprend la mise en contact dudit mélange gazeux avec une face d'une membrane de séparation de gaz comprenant une couche mince d'un polyester ou copolyester formé par réaction d'un acide dicarboxylique aromatique ou d'un de ses dérivés et d'une quantité égale ou supérieure à 50 moles % d'un tétrabromobisphénol A (I) de formule générale :

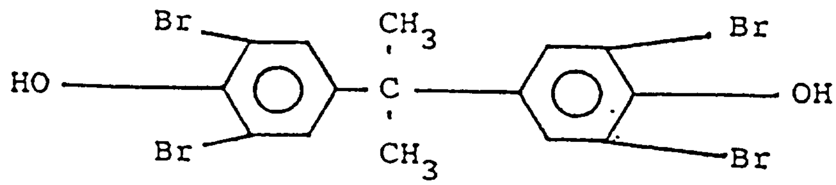

(I)

dans lequel ledit acide dicarboxylique aromatique ou son dérivé comprend l'acide isophtalique ou son dichlorure et/ou l'acide 4-bromoisophtalique ou son dichlorure et l'acide téréphtalique ou son dichlorure et/ou l'acide 2-bromotétraphtalique ou son dichlorure comme composé du type acide dicarboxylique, le rapport molaire desdits acides iso/téré-dicarboxyliques étant compris dans l'intervalle d'environ 80:20 à environ 20:80 ; ladite membrane présentant une association de forte sélectivité et de grande vitesse de perméation, tout en maintenant une différence de pression de part et d'autre de la membrane, et en évacuant le constituant ayant subi une perméation de l'autre face de la membrane, ayant subi un enrichissement en au moins un constituant.

**3.** Procédé suivant la revendication 2, dans lequel le polyester ou copolyester est dérivé essentiellement de l'acide dicarboxylique aromatique ou de son dérivé et d'un mélange de diols comprenant une quantité égale ou supérieure à 50 moles % du tétrabromobisphénol A (I) et une quantité égale ou inférieure à 50 moles % d'un autre bisphénol.

**4.** Procédé suivant la revendication 2, dans lequel le tétrabromobisphénol A représentant 100 moles % du diol constitué de bisphénol.

**5.** Procédé suivant la revendication 3, dans lequel le tétrabromobisphénol A représente au moins environ 80 moles % du mélange des diols.

**6.** Procédé suivant la revendication 2, dans lequel les acides dicarboxyliques comprennent 80 moles % d'isophtalate et 20 moles % de téréphtalate.

**7.** Procédé suivant la revendication 2, dans lequel le rapport molaire des acides iso/téré-dicarboxyliques est compris dans l'intervalle d'environ 50:50 à environ 20:80.

**8.** Procédé suivant la revendication 2, dans lequel le rapport molaire des acides iso/téré-dicarboxyliques est compris dans l'intervalle d'environ 30:70 à environ 20:80.

**9.** Procédé suivant la revendication 2, dans lequel le mélange gazeux comprend l'oxygène et l'azote.

**10.** Procédé suivant la revendication 2, dans lequel le mélange gazeux consiste en air.

**11.** Procédé suivant la revendication 2, dans lequel le mélange gazeux est un mélange comprenant de l'anhydride carbonique et du méthane.

**12.** Procédé suivant la revendication 2, dans lequel le mélange gazeux est un mélange comprenant de l'hélium et du méthane.

**13.** Procédé suivant la revendication 3, dans lequel l'autre bisphénol est le 4,4'-[2,2,2-trifluoro-1-[trifluorométhyléthylidène]bis-[2,6-dibromophénol].

**14.** Procédé suivant la revendication 2, dans lequel le motif récurant prédominant du polyester répond à la formule structurale :

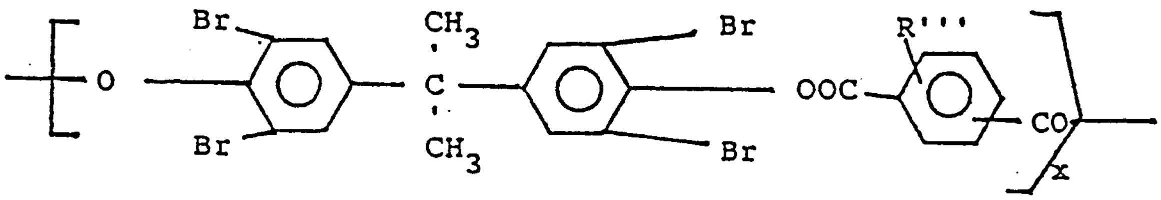

dans laquelle X représente un nombre entier ayant une valeur d'au moins environ 20 et R''' représente l'hydrogène ou le brome.

**15.** Membrane de séparation de gaz comprenant une couche mince d'un polyester ou copolyester formé par réaction d'un acide dicarboxylique aromatique ou d'un de ses dérivés et d'un mélange de diols comprenant 50 ou 80 moles % d'un tétrabromobisphénol A de formule générale :

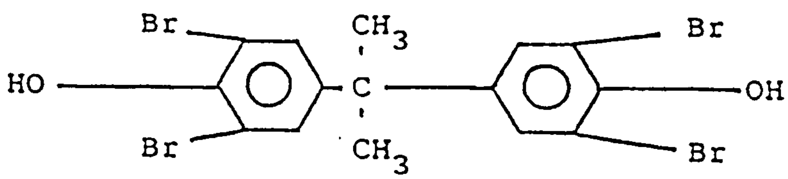

(I)

et 20 ou 50 moles % de 4,4'-[2,2,2-trifluoro-1-[trifluorométhyléthylidène]-bis-[2,6-dibromophénol], dans laquelle ledit acide aromatique ou son dérivé comprend l'acide isophtalique ou son dichlorure et/ou l'acide 4-bromoisophtalique ou son dichlorure et l'acide téréphtalique ou son dichlorure et/ou l'acide 2-bromotéréphtalique ou son dichlorure comme composé du type acide dicarboxylique ; le rapport molaire des acides iso/téré-dicarboxyliques étant compris dans l'intervalle d'environ 80:20 à environ 20:80 ; ladite membrane présentant une association de forte sélectivité et de grande vitesse de perméation.

**16.** Membrane de séparation de gaz suivant la revendication 15, dans laquelle les acides dicarboxyliques comprennent 80 moles % d'isophtalate et 20 moles % de téréphtalate.

**17.** Membrane de séparation de gaz suivant la revendication 15, dans laquelle le rapport molaire de acides iso/téré-dicarboxyliques est compris dans l'intervalle d'environ 50:50 à environ 20:80.

**18.** Membrane de séparation de gaz suivant la revendication 15, dans laquelle le rapport des acides iso/téré-dicarboxyliques est compris dans l'intervalle d'environ 30:70 à environ 20:80.

**19.** Membrane de séparation de gaz suivant la revendication 15, dans laquelle le motif récurant prédominant du polyester répond à la formule structurale :

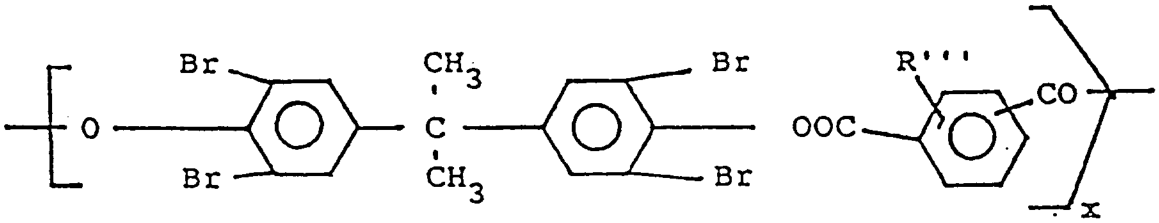

dans laquelle x représente un nombre entier ayant une valeur d'au moins environ 20 et R''' représente l'hydrogène ou le brome.